**Europäisches Patentamt**

**European Patent Office**

**Office européen des brevets**

(19)

(11) Numéro de publication: **0 283 335**
**B1**

(12)

# FASCICULE DE BREVET EUROPEEN

(45) Date de publication du fascicule du brevet:
**22.08.90**

(51) Int. Cl.⁵: **F16J 15/36**

(21) Numéro de dépôt: **88400296.5**

(22) Date de dépôt: **09.02.88**

(54) **Bague d'étanchéité.**

(30) Priorité: **10.02.87 FR 8701609**

(43) Date de publication de la demande:
**21.09.88 Bulletin 88/38**

(45) Mention de la délivrance du brevet:
**22.08.90 Bulletin 90/34**

(84) Etats contractants désignés:
**DE ES FR GB IT NL SE**

(56) Documents cités:
**GB-A- 2 085 982**
**US-A- 2 806 720**
**US-A- 2 899 219**
**US-A- 4 342 538**

(73) Titulaire: **JAEGER, 2, rue Baudin,**
**F-92303 Levallois-Perret(FR)**

(72) Inventeur: **Baglin, Richard, 6, rue du Bois Saint-Père,**
**F-92500 Rueil Malmaison(FR)**

(74) Mandataire: **Bloch, Gérard et al, 2, square de l'Avenue**
**du Bois, F-75116 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne une bague d'étanchéité destinée à former avec une contre-bague un dispositif d'étanchéité entre un arbre rotatif et une partie fixe, applicable en particulier aux pompes centrifuges, et comprenant, de façon classique, une bague de frottement, une membrane souple comportant à une extrémité un voile rendu solidaire de la bague de frottement par un boîtier d'assemblage et un collet serré par un anneau sur la pièce à étancher, une pièce d'entretoise sur laquelle est serti le boîtier d'assemblage et un organe de rappel monté entre la pièce d'entretoise et l'anneau pour écarter l'une de l'autre les deux extrémités de la membrane et, en outre, un soufflet extérieur élastique qui la recouvre sur pratiquement toute sa longueur, l'espace compris entre la membrane intérieure et ledit soufflet extérieur étant rempli partiellement d'un liquide ou d'une graisse neutre.

L'utilisation de ces bagues d'étanchéité avec les pompes destinées à traiter des produits alimentaires pose de graves problèmes d'hygiène. En effet, des particules de matières putrescibles peuvent se loger dans les interstices existant entre les différentes pièces de ces bagues et conduire à des proliférations de bactéries et provoquer de dangereuses altérations des produits traités.

Pour éviter des inconvénients on peut prévoir de recouvrir la bague d'étanchéité sur pratiquement toute sa longueur d'un soufflet élastique.

La présence de ce soufflet extérieur isole, comme on le désire, l'espace intérieur de la bague du liquide extérieur mais celui-ci ne participe alors plus à la pression qu'il exerce habituellement sur la face de contact entre la bague de frottement et la contre-bague.

Cette absence de contre-pression sur la face frottante nuit à l'étanchéité et on a déjà proposé, par exemple dans US-A 4342.538, de remplir l'espace compris entre la membrane intérieure de la bague et le soufflet extérieur d'un liquide de remplissage ou une graisse neutres, tels que glycérine graisse vaseline.

Mais pour maintenir entre la bague de frottement et la contre-bague un contact frottant assurant l'étanchéité dynamique dans les meilleures conditions, il est nécessaire, et c'est ce que prévoit l'invention, que le soufflet extérieur forme avec la membrane souple une cavité étanche dans laquelle le liquide de remplissage peut-être mis sous pression par déformation élastique du dit soufflet, sous l'effet de la pression du fluide à étancher.

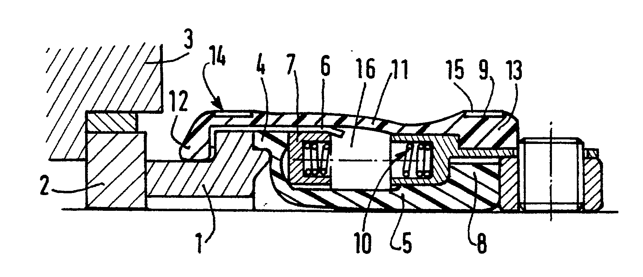

A titre nullement limitatif, on a représenté au dessin annexé un example de réalisation de l'invention, dessin sur lequel la figure unique est une vue en coupe axiale d'une bague selon l'invention à l'état libre.

La bague d'étanchéité représentée est montée sur l'arbre rotatif d'une machine telle qu'une pompe centrifuge. Elle comprend une bague de frottement 1 sont la face frottante est en contact de la contre-bague 2 fixée au carter 3 de la pompe. La bague de frottement 1 est rendue solidaire d'un voile 4 d'une membrane en matière élastique 5 par un boîtier d'assemblage 6 serti sur la bague 1. Une pièce d'entretoise 7 est montée à l'intérieur du boîtier 6 de façon à bloquer en position le voile 4 de la membrane élastique contre la bague de frottement 1.

La membrane élastique comporte une partie 8 en forme de collet serrée sur l'arbre par un anneau 9. La pièce d'entretoise 7 et l'anneau de serrage 9 présentent chacun un logement qui se font face et servent d'appui aux extrémités d'un ressort de compression hélicoïdal 10.

Un soufflet élastique 11 extérieur recouvre la bague qui vient d'être décrite en s'appliquant étroitement, par son extrémité 12 en forme de voile sur la bague de frottement 1, par sa paroi centrale, sur le boîtier d'assemblage 6 et, par sa partie arrière 13, sur l'anneau de serrage 8. L'application étroite du soufflet 11 sur la bague d'étanchéité est assurée par des anneaux 14, 15.

L'espace intérieur 16 entre les membranes 5 et 11 est rempli partiellement d'un liquide ou d'une graisse neutre assurant la contre-pression utile sur la face frottante entre la bague de frottement 1 et la contre-bague 2. La quantité du fluide visqueux introduit dans l'espace 16 peur varier entre le 1/2 et les 9/10 de la capacité disponible. Plus la quantité relative introduite est importante et plus l'action de la pression du fluide sur la membrane extérieure 11 se répercute sur la membrane intérieure 5 pour appliquer plus fortement l'anneau de frottement 1 sur la contrebague 2. On peut ainsi doser précisément cette action pour réaliser une garniture dont l'étanchéité est parfaite pour une large gamme de pression à étancher et en même temps assurer une consommation d'énergie au frottement minimum garantissant une longue durée de fonctionnement.

Bien entendu l'invention est applicable à tout type de bague d'étanchéité, la forme du soufflet extérieur étant adaptée à celles des faces extérieures de cette bague.

## Revendications

1. Bague d'étanchéité destinée à former avec une contre-bague un dispositif d'étanchéité entre un arbre rotatif et une partie fixe, applicable en particulier aux pompes centrifuges, et comprenant, de façon classique, une bague de frottement (1), une membrane souple comportant (5) à une extrémité un voile (4) rendu solidaire de la bague de frottement (1) par un boîtier d'assemblage (6) et un collet serré par un anneau sur la pièce à étancher, une pièce d'entretoise (7) sur laquelle est serti le boîtier d'assemblage (6) et un organe de rappel (10) monté entre la pièce d'entretoise (7) et l'anneau pour écarter l'une de l'autre les deux estrémités de la membrane (5) et, en outre, un soufflet extérieur élastique (11) qui la recouvre sur pratiquement toute sa longueur, l'espace (16) compris entre la membrane intérieure (5) et ledit soufflet extérieur (11) étant rempli partiellement d'un liquide ou d'une graisse neutre, caractérisé par le fait que le soufflet extérieur élastique (11) est maintenu par des moyens de serrage (14, 15) appliqués au moins sur les parties d'extrémité de la bague et forme avec la membrane intérieure (5) une cavité étanche dans laquelle le liquide ou graisse neutre peut être mis sous pression par déformation élastique du dit soufflet, sous l'effet de la pression du fluide à étancher et transmettre ainsi une force axiale à l'anneau de frottement (1) et maintenir un contact frottant assurant l'étanchéité dynamique dans les meilleures conditions.

2. Bague d'étanchéité selon la revendication 1, dans laquelle les moyens de serrage sont des anneaux (14, 15) appliqués respectivement au niveau de la bague de frottement (1) et du collet arrière de la membrane (5).

## Patentansprüche

1. Dichtring, welcher mit einem Gegenring eine Dichtungsvorrichtung bildet zwischen einer drehbaren Welle und einem feststehenden Teil, insbesondere anwendbar für Zentrifugalpumpen und in herkömmlicher Weise bestehend aus einem Reibring (1), einer weichen Membran (5) mit, an einem Ende, einer Überdeckung (4), welche über ein Verbindungsgehäuse (6) und einen von einem Ring auf das abzudichtende Teil gepreßten Bundring kraftschlüssig mit dem Reibring (1) verbunden ist, einem Verbindungsstück (7), auf welches das Verbindungsgehäuse (6) gepreßt ist, und einem zwischen dem Verbindungsstück (7) und dem Ring montierten Abdrückorgan (10), und die beiden Enden der Membran (5) auseinanderzuhalten, und, ausserdem, einer elastischen Außenmanschette (11), welche diese auf praktisch ihrer gesamten Länge bedeckt, wobei der Raum (16) zwischen der inneren Membran (5) und der genannten Außenmanschette (11) teilweise mit einer Flüssigkeit oder einem Neutralfett gefüllt ist, dadurch gekennzeichnet, daß die elastische Außenmanschette (11) von Klemmvorrichtungen (14, 15) gehalten wird, welche zumindest auf den Endstücken des Ringes aufliegen, und mit der inneren Membran (5) einen dichten Hohlraum bildet, in welchen die Flüssigkeit oder das Neutralfett unter Druck durch elastische Verformung der genannten Manschette, unter Einwirkung des Druckes der Flüssigkeit, gegen die die Dichtkeit zu erhalten ist, eingebracht werden kann und somit auf den Reibring (1) einen Axialdruck übertragen und einen Reibkontakt aufrechterhalten, welcher dynamische Dichtigkeit unter besten Bedingungen gewährleistet.

2. Dichtring gemäß Anspruch 1, bei welchem die Klemmvorrichtungen Ringe (14, 15) sind, welche sich auf Höhe des Reibringes (1) bzw. des hinteren Bundringes der Membran (5) befinden.

## Claims

1. Hermetic seal whose purpose is to form together with a counter-ring a hermetic device between a rotating shaft and a fixed part, especially applicable to centrifugal pumps, and comprising, in a classical manner, a friction ring (1), a flexible membrane (5) comprising at one end a disc (4) which is made integral with the friction ring (1) by means of an assembly housing (6) and a collar clamped by a band on to the component which is to be made hermetic, a brace component (7) on which is set the assembly housing (6) and a return element (10) assembled between the brace component (7) and the band in order to separate the two ends of the membrane (5) from one another and, in addition, an exterior elastic bellows (11) which covers it over practically the whole of its length, the space (16) between the interior membrane (5) and the said exterior bellows (11) being partially filled with a neutral liquid or grease, characterised by the fact that the exterior elastic bellows (11) is held by clamping means (14, 15) applied at least to the end parts of the ring and forms with the interior membrane (5) a hermetic cavity in which the liquid or neutral grease can be put under pressure by elastic deformation of the said bellows, under the influence of the pressure of the fluid against which hermeticity is to be obtained and thus transmit an axial force to the friction ring (1) and maintain a friction contact which ensures dynamic hermeticity in the best conditions.

2. Hermetic seal according to claim 1, in which the clamping means are bands (14, 15) applied at the level of the friction ring (1) and of the rear collar of the membrane (5) respectively.